# FASCICULE DE BREVET EUROPEEN

(11) **EP 0 470 025 B1**
(45) Date de publication et mention de la délivrance du brevet: **24.05.1995**
(21) Numéro de dépôt: 91440062.7
(22) Date de dépôt: 26.07.1991
(51) Int. Cl.: F15B 15/10, B66F 3/35, B62D 61/12

(54) **Ensemble de manoeuvre à soufflet**
Balgstellantrieb
Bellow actuator

(30) Priorité: 31.07.1990 FR 9009933
(43) Date de publication de la demande: 05.02.1992
(73) Titulaire: LOHR INDUSTRIE, 67980 Hangenbieten (FR)
(72) Inventeur: Hecker, Dominique, F-67200 Strasbourg (FR)
(74) Mandataire: Metz, Paul

(56) Documents cités:
- EP-A- 0 233 500
- GB-A- 2 057 571
- US-A- 3 285 621
- US-A- 3 325 181
- US-A- 3 512 802
- US-A- 3 617 072

## Description

La présente invention se rapporte à un ensemble de manoeuvre à soufflet pour l'essieu d'un véhicule.

Plus particulièrement, l'ensemble de manoeuvre selon l'invention est un soufflet de traction.

On emploie couramment les soufflets dans les suspensions de véhicules à titre d'élément élastique.

Ceux-ci sont formés d'un corps en caoutchouc obturé à chacune de ses extrémités par une plaque de fermeture.

La plaque de fermeture inférieure ou supérieure est solidarisée à un plan fixe, en général le châssis, permettant d'assurer une liaison élastique entre celui-ci et l'essieu ou chaque roue ou train de roues.

On utilise également les soufflets à titre de moyen moteur pour des besoins d'élévation de faible amplitude.

C'est le cas pour le levage de châssis. Le soufflet fixé au châssis est gonflé et se dilate principalement longitudinalement, provoquant une poussée axiale par rapport au plan fixe.

Cette force longitudinale de poussée peut être utilisée dans l'application particulière du relevage d'essieu.

Fixé au châssis par l'une ou l'autre de ses plaques de fermeture, la force de poussée engendrée par la mise en pression du soufflet ne peut être appliquée directement à l'essieu ou à une pièce qui lui est solidaire en raison de son implantation.

D'une part, dans le cas d'un soufflet dirigé vers le bas, le sens de la force est contraire au mouvement de relevage et celui-ci ne peut s'effectuer qu'à travers un renvoi de mouvement compliqué.

D'autre part, dans le cas d'un soufflet dirigé vers le haut, l'éloignement de sa plaque de fermeture mobile impose un ensemble mécanique de transfert de la force jusqu'à l'essieu.

On connaît déjà par le brevet américain 3,325,181 GRANNING un ensemble de manoeuvre d'un soufflet comprenant deux plaques de fermeture l'une inférieure l'autre supérieure et une tige coulissant librement dans un passage traversant le soufflet et ressortant à travers la plaque supérieure. Selon cette réalisation, la plaque inférieure présente des moyens d'étanchéité avec le passage traversant qui contient un tube de guidage de la tige. La tige traversante n'est pas solidaire de la plaque supérieure pour préserver la durée de vie du soufflet en évitant la transmission des sollicitations en flexion transmises par le bras de suspension lors du roulage.

Cette obligation entraîne une conception et une réalisation constructives de caractère complexe. En effet, il faut prévoir un passage traversant contenant un guide coaxial pour la tige et en plus une étanchéité du soufflet entre le passage de tige et la plaque supérieure. Par ailleurs, la tige doit être parfaitement calibrée car elle coulisse dans un guide. Finalement, il n'existe aucune possibilité de basculement du corps du soufflet si bien que cette réalisation est condamnée à des mouvements de faible amplitude.

La présente invention a pour but de remédier à ces différents inconvénients en proposant un soufflet de traction permettant une prise mécanique directe par sa tige de traction sur une pièce solidaire de l'essieu.

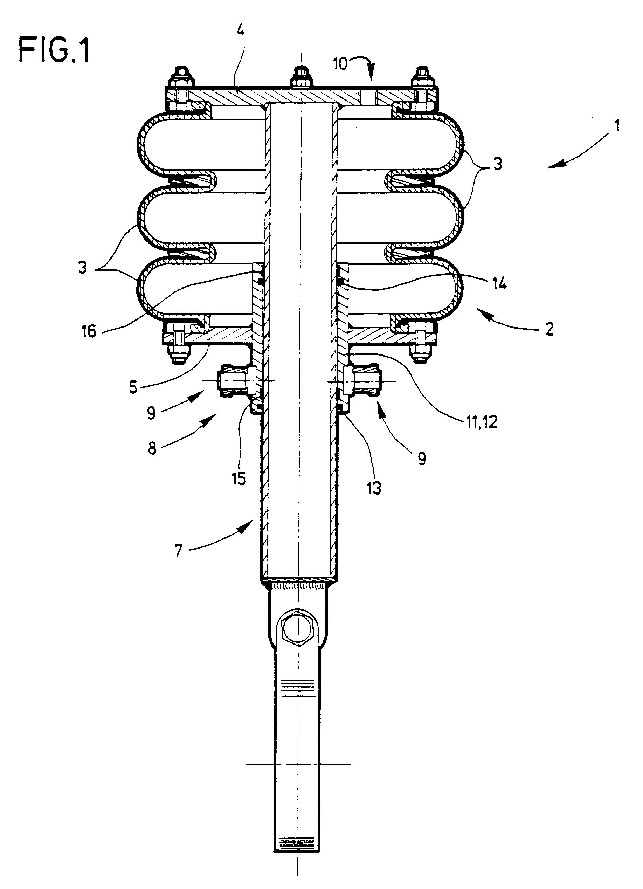

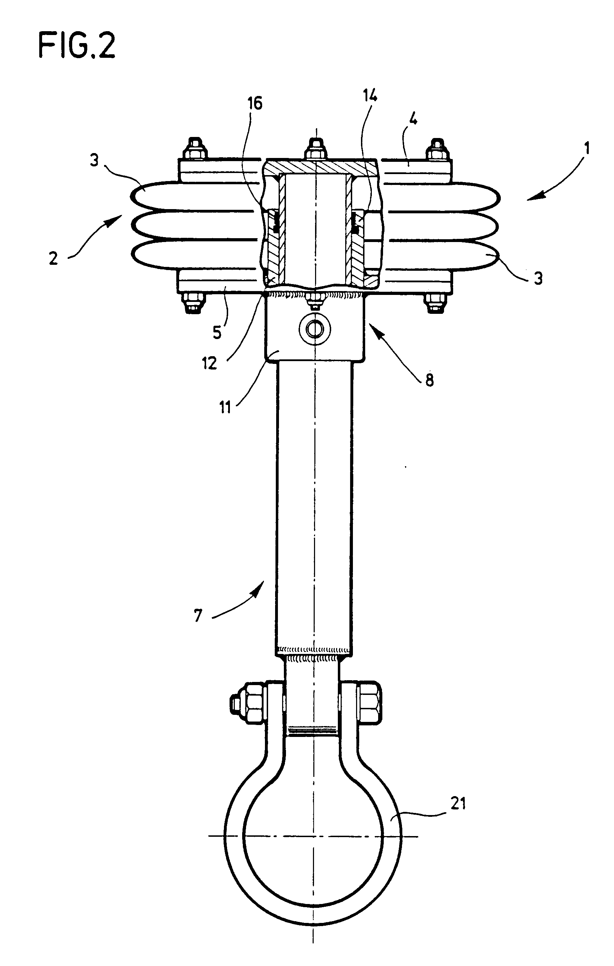

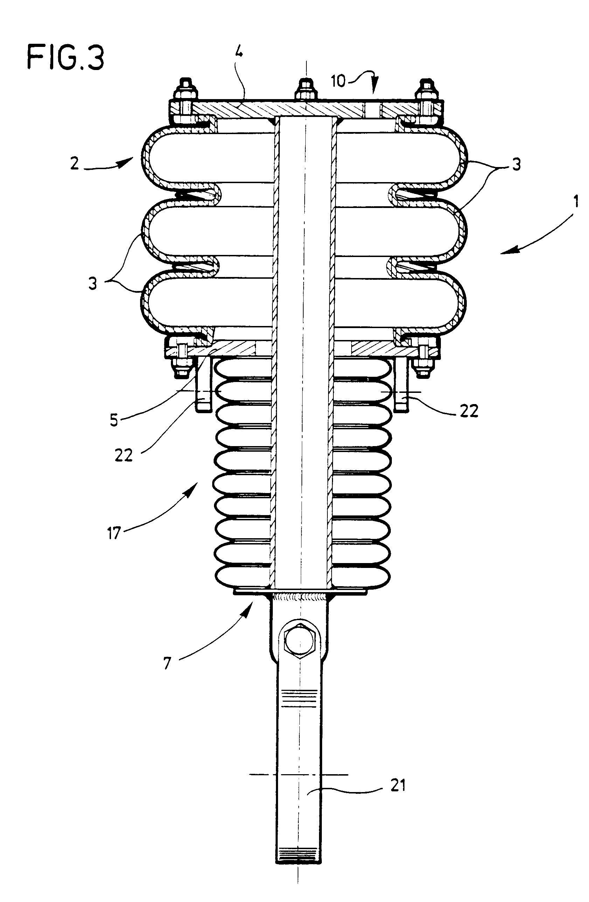

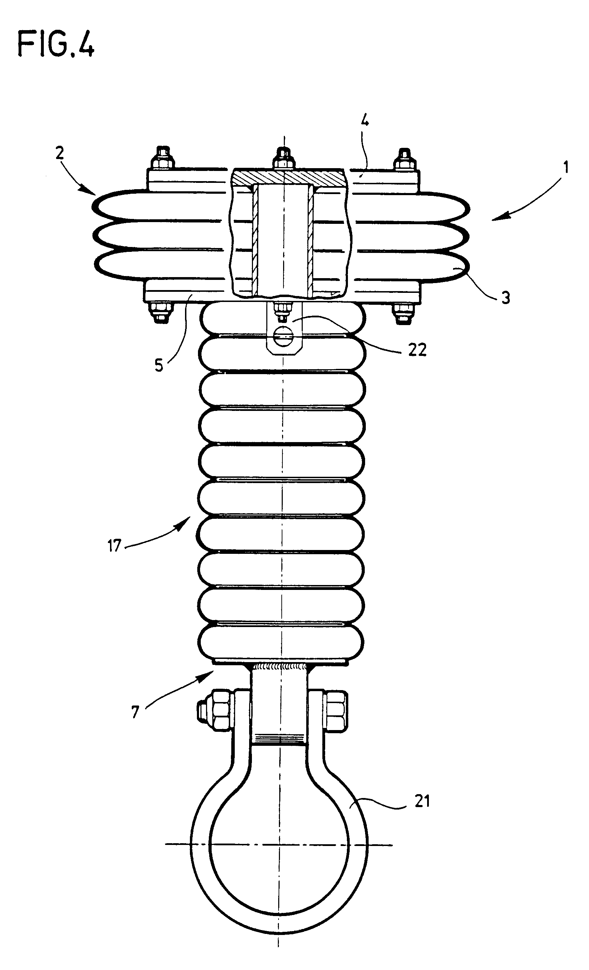

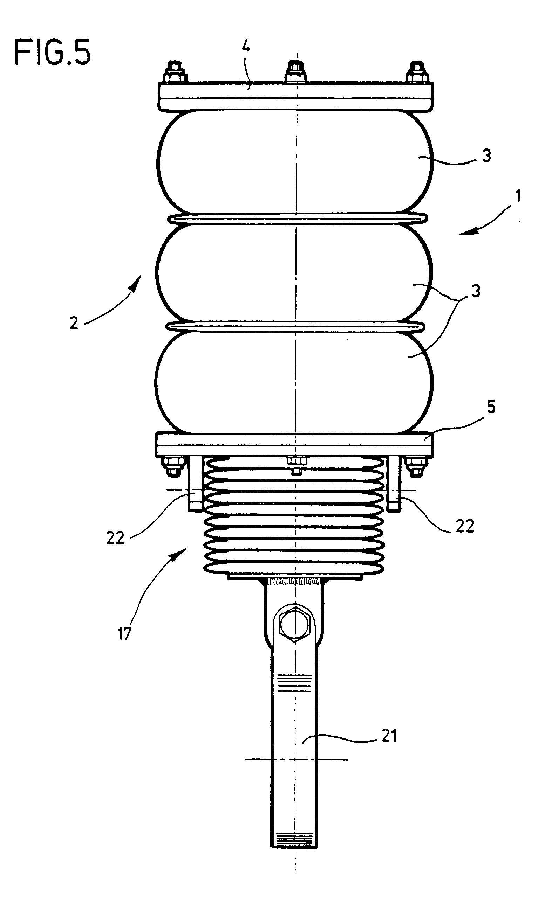

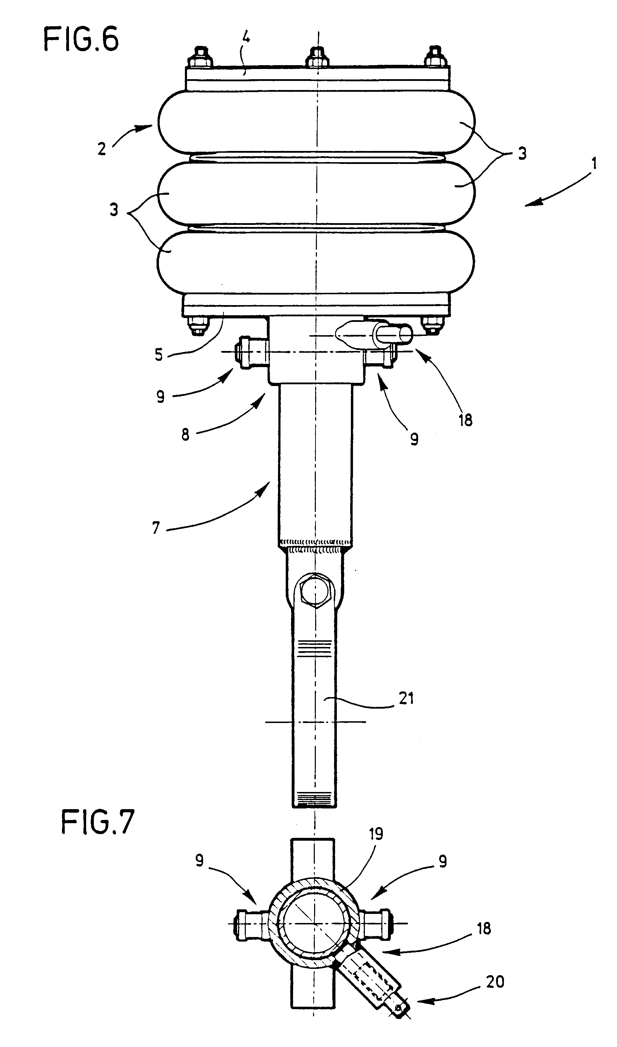

On comprendra mieux l'invention à l'aide de la description ci-après exécutée à titre d'exemple en référence aux figures annexées dans lesquelles :
. la figure 1 est une vue en coupe longitudinale de la variante de base du soufflet de traction selon l'invention à l'état quasi-gonflé ;
. la figure 2 est une vue de profil avec écorché de la variante de base du soufflet selon l'invention à l'état dégonflé ;
. la figure 3 est une vue en coupe longitudinale d'une variante à soufflet additionnel d'étanchéité à l'état semi-gonflé ;
. les figures 4 et 5 sont des vues de profil de la variante de la figure 3 respectivement à l'état dégonflé et gonflé ;
. la figure 6 est une vue de profil d'une variante de soufflet de traction à verrou de blocage de la tige ;
. la figure 7 est une vue en coupe transversale au niveau du verrou.

L'ensemble de manoeuvre selon l'invention procède de l'idée générale inventive qui consiste à transformer un soufflet classique prévu pour travailler en compression en soufflet de traction.

Plus précisément, l'invention consiste à utiliser un soufflet directement en tant qu'organe de traction en solidarisant une tige traversante à une plaque de fermeture du soufflet, ladite tige traversant la plaque de fermeture opposée et faisant saillie hors du soufflet.

On décrira ci-après la réalisation de base illustrant le concept inventif exposé ci-dessus ainsi qu'une variante à soufflet additionnel d'étanchéité du soufflet moteur et de protection de la tige.

La réalisation de base du soufflet de traction représenté sur les figures 1 et 2 se compose principalement des moyens essentiels suivants.

Un soufflet moteur 1 comporte un corps cylindrique en caoutchouc 2 formé d'une pluralité d'anneaux de dilatation tels que 3 superposés et solidaires entre eux.

Ce corps est obturé à chacune de ses extrémités par une plaque de fermeture .

Une plaque supérieure 4, ferme l'ouverture supérieure du corps 1. Une plaque inférieure 5 ferme l'ouverture inférieure du corps 1 et présente une ouverture centrale 6 pour le passage d'une tige de traction 7 dont une extrémité 8 est solidarisée à la plaque de fermeture supérieure 4.

Ladite plaque de fermeture supérieure 4 est laissée mécaniquement libre tandis que la plaque de fermeture inférieure 5 est montée solidaire d'un support fixe par rapport à la tige de traction 7 ou articulée à pivotement sur celui-ci par l'intermédiaire de bouts d'axes tels que 9 .

On précise ici que la plaque inférieure est fixe par rapport à la tige c'est à dire qu'on peut la prendre comme référence pour les mouvements de la tige.

Une entrée 10 est raccordée à une alimentation en fluide comprimé par exemple de l'air comprimé, admis par un dispositif de commande non représenté .

La plaque de fermeture inférieure 5 présente des moyens d'étanchéité et de guidage 11 au niveau de son ouverture centrale 6 de passage en vue du maintien-guidage de la tige et de l'étanchéité du soufflet moteur.

Ces moyens d'étanchéité sont par exemple circulaires sous la forme d'une bague d'étanchéité et de guidage 12 pourvue d'au moins deux rainures intérieures 13 et 14 servant de logement annulaire à des joints toriques d'étanchéité 15 et 16 de section circulaire ou particulière, par exemple en "X". Des moyens de pression sont en outre prévus pour appliquer les joints sur la tige et maintenir l'étanchéité.

La variante particulière représentée sur les figures de 3 à 5 comporte un soufflet additionnel 17 destiné à assurer l'étanchéité du soufflet moteur vers le bas et le long de la tige de traction 7 en remplacement des bagues et joints d'étanchéité de la version précédente.

Ce soufflet additionnel joue également le rôle de protection pour la tige de traction qui est ainsi habillée isolée du milieu extérieur.

Il s'agit d'un soufflet de section ou de diamètre inférieur à celui du soufflet moteur. Selon une variante sa section est choisie légèrement supérieure à celle de la tige de traction 7 et d'une longueur d'extension voisine de la course de la tige de traction.

Ce soufflet additionnel 17 recouvre la tige de traction sur pratiquement toute sa longueur. Il est solidarisé d'une part à la plaque de fermeture fixe 5 traversée par la tige de traction 7 et d'autre part fixé à l'extrémité inférieure de la tige de traction.

Il reçoit la pression du fluide moteur par le passage de la tige de traction 7 à travers la plaque de fermeture fixe 5.

A titre de fonction supplémentaire, on prévoit un blocage de la tige de traction 7 dans une position quelconque le long de sa course par l'intermédiaire d'un dispositif de verrou approprié 18.

Celui-ci est par exemple situé au niveau de la sortie de la tige de traction et se présente sous la forme d'un support transversal de maintien 19 d'un doigt coulissant de blocage 20 venant s'engager dans l'un ou l'autre des évidements que la tige de traction 7 possède le long de son corps.

Ces évidements peuvent par exemple être constitués par une structure linéaire à denture ou à crans (non représentée).

Le dispositif de verrou 18 est actionné manuellement ou par tout mécanisme approprié entraîné par une énergie quelconque, fluide, électrique magnétique ou autre.

Selon les applications, la tige de traction 7 comporte à son extrémité libre une pièce terminale d'articulation 21 ou de jonction à un ensemble mécanique ou à une pièce intermédiaire, non représentée, en vue de transmettre et de convertir le mouvement de translation.

L'invention est appliquée au relevage des essieux de véhicules. A cet effet, la pièce d'articulation 21 est reliée directement ou par une pièce intermédiaire à une pièce solidaire de l'essieu.

Selon la variante à soufflet additionnel, et dans le cadre d'une application au relevage d'essieux, la plaque inférieure de fermeture est articulée au châssis par l'intermédiaire de pièces palières ou oreilles telles que 22.

En fonctionnement, le fluide comprimé, envoyé dans le soufflet par l'entrée 10, met en pression le corps du soufflet moteur engendrant le déplacement de la plaque supérieure vers le haut, ce qui entraîne la tige de traction et par là même la pièce d'articulation 21 dans un mouvement de translation repris en vue du relevage de l'essieu.

Selon un mode de fonctionnement dans le domaine du relevage d'un essieu, le soufflet moteur est précontraint en pression à une valeur telle que la seule commande en pression du soufflet de suspension permet d'effectuer à la fois le relevage et le rabaissement de l'essieu.

Ce mode de fonctionnement particulier présente l'important avantage dans ce cas d'application de simplifier les séquences de commande et dans certains cas de pouvoir manoeuvrer l'essieu à partir d'une commande unique.

Tout autre mode de fonctionnement peut être envisagé à d'autres valeurs de pression, par exemple à une pression située juste en dessous de la pression motrice de manière à diminuer notablement le temps d'inertie entre l'envoi du fluide sous pression et le mouvement de la tige.

## Revendications

1. Ensemble de manoeuvre pour l'essieu d'un véhicule formé d'une part d'un soufflet (1) fermé à l'une de ses extrémités par une plaque de fermeture supérieure (4) et à l'autre de ses extrémités par une plaque de fermeture inférieure (5) et d'autre part d'une tige de traction (7) traversant le soufflet (1) et la plaque de fermeture inférieure (5), cette dernière présentant des moyens d'étanchéité entre la tige et ladite plaque de fermeture inférieure (5), la plaque de fermeture supérieure (4) étant libre en mouvement, caractérisé en ce que la plaque de fermeture inférieure (5) est articulée à pivotement sur le châssis du véhicule, et en ce que la tige de traction (7) est solidarisée par son extrémité supérieure à la plaque de fermeture supérieure (4).

2. Ensemble de manoeuvre selon la revendication 1 caractérisé en ce que la plaque de fermeture inférieure (5) reliée au châssis du véhicule est articulée à pivotement sur celui-ci par l'intermédiaire de bouts d'arbres (9).

3. Ensemble de manoeuvre selon la revendication 2 caractérisé en ce que les bouts d'arbre (9) sont solidaires de moyens de guidage de la tige (7).

4. Ensemble de manoeuvre selon la revendication 3, caractérisé en ce que les moyens de guidage sont aussi les moyens d'étanchéité et sont constitués par une bague de guidage (12) perpendiculaire à la plaque (5) présentant au moins une rainure (13) ou (14) garnie d'un joint torique d'étanchéité.

5. Ensemble de manoeuvre selon la revendication 4, caractérisé en ce que les bouts d'arbre (9) sont solidaires de la partie extérieure de la bague (12) et perpendiculaires à celle-ci.

6. Ensemble de manoeuvre selon les revendications 1 à 5 caractérisé en ce que le soufflet (1) comporte au niveau de la plaque de fermeture inférieure (5), en liaison avec le châssis du véhicule, un dispositif de verrou (18) de maintien de la tige de traction (7) dans une position quelconque.

7. Ensemble de manoeuvre selon la revendication 6 caractérisé en ce que la tige de traction (7) présente une structure linéaire à évidements et en ce que le verrou (18) est formé d'un doigt coulissant (19) dont l'extrémité vient se loger à blocage dans un des évidements.

8. Ensemble de manoeuvre selon la revendication 7 caractérisé en ce que le verrou (18) est activé par un fluide sous pression.

9. Ensemble de manoeuvre selon la revendication 1 caractérisé en ce que l'articulation de la plaque de fermeture au châssis est réalisée par l'intermédiaire de pièces palières ou oreilles (22).

10. Ensemble de manoeuvre selon l'une quelconque des revendications 1 à 3, caractérisé en ce que les moyens d'étanchéité sont réalisés sous la forme d'un soufflet additionnel (17) d'étanchéité et de protection monté entre la plaque de fermeture inférieure (5) et l'extrémité de la tige (7).

11. Ensemble de manoeuvre selon la revendication 10 caractérisé en ce que la section du soufflet additionnel d'étanchéité (17) est inférieure à celle du soufflet moteur.

12. Ensemble de manoeuvre selon la revendication 10 caractérisé en ce que le diamètre du soufflet additionnel d'étanchéité (17) est légèrement supérieur à celui de la tige de traction (7) et en ce que sa longueur d'extension est voisine de la course de la tige de traction (7).

13. Ensemble de manoeuvre selon l'une quelconque des revendications précédentes caractérisé en ce que le soufflet est gonflé à une pression de précontrainte située à une valeur intermédiaire.

14. Ensemble de manoeuvre selon la revendication 13 caractérisé en ce que la pression de précontrainte est telle que la seule commande en pression du soufflet de suspension permet d'effectuer à la fois le relevage et le rabaissement de l'essieu.

## Claims

1. Bellows actuator for the axle of a vehicle formed, on the one hand, by a bellows (1) closed at one of its ends by an upper closure plate (4) and at the other of its ends by a lower closure plate (5) and, on the other hand, by a draw bar (7) extending through the bellows (1) and the lower closure plate (5), the latter having sealing means between the rod and the lower closure plate (5), the upper closure plate (4) being freely movable, characterized in that the lower closure plate (5) is articulated for pivoting on the chassis of the vehicle, and in that the draw bar (7) is fixed by its upper end to the upper closure plate (4).

2. Actuator according to Claim 1, characterized in that the lower closure plate (5) connected to the chassis of the vehicle is articulated for pivoting thereon by means of shaft ends (9).

3. Actuator according to Claim 2, characterized in that the shaft ends (9) are fixed rigidly to guide means of the bar (7).

4. Actuator according to Claim 3, characterized in that the guide means are also the sealing means and are constituted by a guide sleeve (12) perpendicular to the plate (5) and having at least one groove (13) or (14) provided with an annular seal.

5. Actuator according to Claim 4, characterized in that the shaft ends (9) are fixed to the external portion of the sleeve (12) and are perpendicular thereto.

6. Actuator according to Claims 1 to 5, characterized in that the bellows (1) comprises, at the level of the lower closure plate (5) connected to the chassis of the vehicle, a bolt (18) for holding the draw bar (7) in any position.

7. Actuator according to Claim 6, characterized in that the draw bar (7) has a linear structure with recesses and in that the bolt (18) is formed by a sliding pin (19) the end of which is housed for locking in one of the recesses.

8. Actuator according to Claim 7, characterized in that the bolt (18) is activated by a fluid under pressure.

9. Actuator according to Claim 1, characterized in that the closure plate is articulated to the chassis by means of bearing elements or ears (22).

10. Actuator according to any one of Claims 1 to 3, characterized in that the sealing means are made in the form of an additional sealing and protection bellows (17) mounted between the lower closure plate (5) and the end of the rod (7).

11. Actuator according to Claim 10, characterized in that the cross-section of the additional sealing bellows (17) is smaller than that of the actuator bellows.

12. Actuator according to Claim 10, characterized in that the diameter of the additional sealing bellows (17) is slightly greater than that of the draw bar (7), and in that its length is approximately the travel of the draw bar (7).

13. Actuator according to any one of the preceding claims, characterized in that the bellows is inflated to a prestressing pressure situated at an intermediate value.

14. Actuator according to Claim 13, characterized in that the prestressing pressure is such that control of the pressure of the suspension bellows alone permits both lifting and lowering of the axle.

## Patentansprüche

1. Betätigungseinheit für die Radachse eines Fahrzeugs, die einerseits von einem an einem seiner Enden durch eine obere Verschlußplatte (4) und am anderen Ende durch eine untere Verschlußplatte (5) verschlossenen Balg (1), andererseits einem den Balg (1) und die untere Verschlußplatte (5) durchgreifenden Zugstange (7) gebildet ist, wobei die untere Verschlußplatte zwischen sich und der Stange Dichtungsmittel aufweist und die obere Verschlußplatte (4) frei beweglich ist, dadurch gekennzeichnet, daß die untere Verschlußplatte (5) am Fahrzeugchassis schwenkbar gelagert ist und daß die Zugstange (7) mit ihrem oberen Ende mit der oberen Verschlußplatte (4) fest verbunden ist.

2. Betätigungseinheit nach Anspruch 1, dadurch gekennzeichnet, daß die untere Verschlußplatte (5) an dem Fahrzeugchassis unter Zwischenschaltung von Achszapfen (9) schwenkbar gelagert ist.

3. Betätigungseinheit nach Anspruch 2, dadurch gekennzeichnet, daß die Achszapfen (9) mit Führungsmitteln der Stange (7) verbunden sind.

4. Betätigungseinheit nach Anspruch 3, dadurch gekennzeichnet, daß die Führungsmittel zugleich die Dichtungsmittel sind und durch einen senkrecht zur Platte (5) angeordneten Führungsring (12) gebildet sind, welcher zumindest eine mit einem Runddichtring versehene Nut (13) oder (14) aufweist.

5. Betätigungseinheit nach Anspruch 4, dadurch gekennzeichnet, daß die Achszapfen (9) mit dem äußeren Teil des Rings (12) fest verbunden und senkrecht zu diesem angeordnet sind.

6. Betätigungseinheit nach einem der Ansprüche 1 bis 5, dadurch gekennzeichnet, daß der Balg (1) in Höhe der unteren Verschlußplatte (5) eine mit dem Fahrzeugchassis in Verbindung stehende Verriegelungseinrichtung (18) zum Halten der Zugstange (7) in einer beliebigen Stellung aufweist.

7. Betätigungseinheit nach Anspruch 6, dadurch gekennzeichnet, daß die Zugstange Aussparungen mit einem linearen Aufbau aufweist und daß die Verriegelung (18) von einem Kulissenzapfen (20) gebildet ist, dessen Ende in einer der Aussparungen blockierend eingreift.

8. Betätigungseinheit nach Anspruch 7, dadurch gekennzeichnet, daß die Verriegelung (18) durch ein Druckfluid aktivierbar ist.

9. Betätigungseinheit nach Anspruch 1, dadurch gekennzeichnet, daß die Lagerung der Verschlußplatte am Chassis unter Zwischenschaltung von Lager- oder Ösenteilen (22) erfolgt.

10. Betätigungseinheit nach einem der Ansprüche 1 bis 3, dadurch gekennzeichnet, daß die Dichtungsmittel in Form eines zusätzlichen Dichtungs- und Schutzbalges (17) realisiert sind, welcher zwischen der unteren Verschlußplatte (5) und dem Ende der Stange (7) angebracht ist.

11. Betätigungseinheit nach Anspruch 10, dadurch gekennzeichnet, daß der Querschnitt des zusätzlichen Dichtungsbalges (17) kleiner ist als derjenige des Antriebsbalges.

12. Betätigungseinheit nach Anspruch 10, dadurch gekennzeichnet, daß der Durchmesser des zusätzlichen Dichtungsbalges (17) wenig größer ist als derjenige der Zugstange (7) und daß seine Längsausdehnung dem Hub der Zugstange (7) etwa entspricht.

13. Betätigungseinheit nach einem der vorangehenden Ansprüche, dadurch gekennzeichnet, daß der Balg unter einem einen Mittelwert aufweisenden Vorspanndruck steht.

14. Betätigungseinheit nach Anspruch 13, dadurch gekennzeichnet, daß der Vorspanndruck derart ist, daß die bloße Drucksteuerung des Aufhängungsbalges das Anheben bzw. das Absenken der Radachse ermöglicht.
